# EUROPÄISCHE PATENTSCHRIFT

(11) **EP 2 301 361 B1**
(45) Veröffentlichungstag und Bekanntmachung des Hinweises auf die Patenterteilung: **31.08.2011**
(21) Anmeldenummer: 09011531.2
(22) Anmeldetag: 09.09.2009
(51) Int. Cl.: A21D 6/00, A21D 15/02

(54) **Verfahren zum Herstellen von langzeitig lagerfähigen Teiglingen**
Method for manufacturing pastry sections which can be stored for a long period
Procédé de fabrication de portions de pâtes pouvant être stockées sur une longue durée

(43) Veröffentlichungstag der Anmeldung: 30.03.2011
(73) Patentinhaber: Kamps GmbH, 41366 Schwalmtal (DE)
(72) Erfinder: Krapp, Stephan, 34132 Kassel (DE)
(74) Vertreter: Tönhardt, Marion

(56) Entgegenhaltungen:
- EP-A2- 1 941 800
- DE-A1- 3 245 419
- FR-A1- 2 852 205
- webbaecker: "Bäckerkälte: Das richtige Klima macht die Qualität" Internet Zitat 2003, XP002566722 Gefunden im Internet: URL:http://www.webbaecker.de/r_branche/200 3/0303profikaelte.htm> [gefunden am 2010-02-02]

## Beschreibung

Die Erfindung betrifft ein Verfahren zum Herstellen von langzeitig lagerfähigen Teiglingen.

Derartige Teiglinge sind insbesondere Hefeteiglinge, wie Brot- oder Brötchenteiglinge, die grün, vorgegart, oder zumindest halbgebacken sein können, aber auch Feinbackteiglinge.

Langzeitig lagerfähig bedeutet, dass die Teiglinge mindestens acht Wochen, vorzugsweise 12 Wochen, verwendbar sein sollen, ohne dass am fertiggestellten Backprodukt Qualitätsmängel auszumachen sind.

Bei kleinen Teiglingen für Feinbackwaren und Kleingebäck hat sich die Tiefkühllagerung bewährt. Brotteiglinge mit einem Gewicht von 500 g oder darüber konnten bisher allerdings nicht ohne massive Qualitätseinbußen tiefkühlgelagert werden.

Dabei hat geregelte Kälte schon für den Bäcker vor Ort eine ganze Reihe unabweisbarer Vorzüge. Fertigungs- und Backzeiten lassen sich durch den Einsatz von Kälte entkoppeln, größere Chargen können vorbereitet werden und mit jederzeit backfrischen Produkten kann der wichtigste aller Kundenwünsche optimal bedient werden. Diese Vorteile übertragen sich, wenn derzeit praktizierte Back- und Logistiksysteme beleuchtet werden.

Steigende Herstellungskosten und Komplexität stärken die Position von Pre-Bake-Stationen und Bäckerei-Discountern, die industriell produzierte Backwaren vorbacken, um dann die halbgebackene Ware vor den Augen der Kunden noch einmal aufzuwärmen. Diese Brote sind fast fertig ausgebacken und werden vor Ort lediglich noch einmal aufgebacken, damit sie nachgebräunt werden. Durch das Angebot von warmen Backwaren wird die Illusion von Frische und Handwerk vermittelt. Das Ergebnis sind allerdings Backwaren, die auf Kosten der Qualität günstig angeboten werden können. Das mehrmalige Aufbacken von Backwaren hat nämlich einen enormen Feuchtigkeitsverlust zur Folge, der die Produkte austrocknen lässt. Die Alternative, die Produkte in einer zentralen Bäckerei auszubacken und dann auszuliefern, führt dazu, dass die Backwaren nicht bedarfsgerecht zur Verfügung stehen und zudem nach wenigen Stunden schon einen spürbaren Qualitätsverlust erleiden.

Durch die exakte Steuerung und Kontrolle aller wichtigen Parameter im Klimaprozess lässt sich die Produktqualität spürbar steigern und selbst bei sehr großen Produktmengen auch kontinuierlich sichern. Im Interesse hochwertiger Backwaren müssen beim Kühlen, Frosten und Auftauen neben der Temperatur und der Zeit immer auch die Feuchtigkeit und die Luftbewegung kontrolliert und gesteuert werden. Die Zeit ist insbesondere beim Kühlen und noch mehr beim Frosten eine kritische Größe.

Wenn ein Teigling auf Temperaturen für die Tiefkühllagerung, d. h. unterhalb von -18 °C, gekühlt wird, werden regelmäßig drei Kühlphasen durchlaufen, in denen ein ganz unterschiedlich hoher Energieeinsatz notwendig ist, der die weitere Abkühlung vorantreiben soll. Die Tiefkühlphysik ist beispielsweise in dem Artikel "Bäckerkälte: Das richtige Klima macht die Qualität", http:/www.webbaecker.de/r-branche/2003/0303profikaelte.htm, beschrieben.

In einer ersten Kühlphase wird der Teigling von Raumtemperatur bis knapp oberhalb des spezifischen Gefrierpunktes des Teiglinges gekühlt. Bei Teigen, die neben Wasser auch Fette, Salze, Mineralstoffe und andere Bestandteile enthalten, liegt der Gefrierpunkt tiefer als der von reinem Wasser, nämlich bei etwa -7°C. Er soll im Folgenden als spezifischer Gefrierpunkt des Teiglings bezeichnet werden. Für diese erste Phase werden etwa 35 % der gesamten Kühlenergie aufgewendet.

In einer zweiten Kühlphase findet der Phasenübergang des im Teigling gebundenen Wassers von flüssig nach fest statt, er verursacht einen Anteil von etwa 55 % der gesamten Kühlenergie. Je schneller der Teigling in diesem Abschnitt abgekühlt und insbesondere durchgekühlt wird, desto besser ist das Backergebnis. Das "Schockfrosten" sorgt für ein besonders feines Kristallgefüge im Backgut, ohne dabei Enzyme und Struktur zu zerstören. Während dies bei kleinen Teiglingen kein Problem darstellt, gelingt das Schockfrosten bei den großvolumigen Brotteiglingen in der Regel nicht, was später zu einem unbefriedigenden Backergebnis führt.

In einer dritten Kühlphase schließlich werden die Teiglinge weiter bis auf die Lagertemperatur abgekühlt. Dafür werden lediglich 10 % der insgesamt aufgewendeten Kühlenergie verbraucht.

Die Erfindung befasst sich insbesondere mit Verbesserungen in der ersten und in der zweiten Kühlphase. Trotz der dort nur geringfügig vorzunehmenden Abkühlung von wenigen Grad Celsius wird hier normalerweise weit mehr als die Hälfte der aufgewendeten Kühlenergie verbraucht.

Es ist daher die Aufgabe der Erfindung, ein Verfahren zum Herstellen von langzeitig lagerfähigen Teiglingen anzugeben, bei dem sichergestellt ist, dass der Teigling schnell abgekühlt wird, wobei auch für eine gute Durchkühlung gesorgt werden soll. Dies ist insbesondere dann wichtig, wenn größere Teiglinge, z. B. Brotteiglinge mit einem Gewicht von 500 g und darüber, behandelt werden sollen.

Diese Aufgabe wird durch ein Verfahren nach Anspruch 1 gelöst. Erfindungsgemäß werden die Teiglinge in einen klimatisierten Raum gebracht, in dem eine Luftfeuchtigkeit von 100 % r.F. eingestellt wird, wobei Wasser mit einer Tröpfchengröße < 10 µm vernebelt wird. Die Temperatur des Raumes wird abgesenkt und die abgesenkte Temperatur wird gehalten, bis die Kerntemperatur des Teiglings unter dem spezifischen Gefrierpunkt des Teiglings liegt.

Der Einsatz eines Wassernebels mit einer Tröpfchengröße < 10 µm bei der Herstellung von Back-Vorprodukten ist bekannt. Beispielsweise will die EP 1 941 800 A2 mit einem Umströmen des Back-Vorproduktes erreichen, dass die mikrofeinen Wassertröpfchen in das jeweilige Back-Vorprodukt eindringen, so dass sich eine im Wesentlichen homogene Durchfeuchtung des jeweiligen Back-Vorproduktes einstellt. Der Tröpfchennebel soll dabei mittels eines Ultraschallvemeblers erzeugt werden, wobei das zum Einsatz kommende hochreine Wasser vorab in einer Umkehrosmoseanlage von Keimen, Kalk und Salzen befreit wird. Dabei wird die Anhebung der relativen Luftfeuchte (r.F.) durch die dort als Ultraschall-Klimatisierung bezeichnete Technik in einer Gefrierphase bei -18 °C, an die sich eine Lagerphase bei -10 °C sowie eine Auftauphase bei +1 bis 3 °C anschließen, beschrieben. Der Trtipfchennebel sorgt beim gefrorenen Produkt auf der Oberfläche für Feuchtigkeit.

Die FR 2 852 205 A beschreibt ein Verfahren zur Zubereitung von fermentierbaren Lebensmittelprodukten durch Umwälzluft, das wenigstens eine Lagerphase der Produkte im Kühlen, während gekühlte Kaltluft umgewälzt wird, insbesondere um die Fermentierung der Produkte zu unterbrechen, und eine Phase der Behandlung mit Befeuchtung/Erwärmung einschließt, in der warme und feuchte Luft umgewälzt wird. Während dieser Befeuchtungs/Erwärmungsphase soll die Umwälzluft mit einem von einem Ultraschallgenerator erzeugten befeuchtenden Nebel angefeuchtet werden.

Die Erfindung setzt den Tröpfchennebel nicht ein, um eine homogene Durchfeuchtung des jeweiligen Teiglings einzustellen, die bereits bei den vorbereitenden Schritten der Teiglingsherstellung erreicht wird. Es wurde sogar gefunden, dass keine messbare Menge an Feuchtigkeit aus der vernebelten Atmosphäre aufgenommen wird. Bei einem Brotteigling mit einem Gewicht von 1000 g würde eine Feuchtigkeitsaufnahme von 3 % einer Gewichtszunahme von messbaren 30 g entsprechen. Diese Gewichtszunahme wurde niemals beobachtet.

Allerdings wurde festgestellt, dass das Vorhandensein des Tröpfchennebels den Kälteübergang zum Teigling merklich verbessert. Dies kann durch Leitfähigkeitsmessungen bestätigt werden. Dabei können die Behandlungszeiten erheblich verkürzt werden. Zudem entfallen Probleme, die üblicherweise mit der Kondensation von Feuchtigkeit bei sinkenden Temperaturen einhergehen.

Da weiterhin die Kerntemperatur des Teiglings als Referenz für die Steuerung der Raumtemperatur verwendet wird, wird sichergestellt, dass der Teigling komplett optimiert durchgefrostet ist.

Nach einer vorteilhaften Ausgestaltung des erfindungsgemäßen Verfahrens werden die Teiglinge vor dem Absenken der Raumtemperatur bei einer Temperatur von 15°C bis 20°C über eine vorbestimmte Zeitdauer gegart. Das Garen bei diesen relativ niedrigen Temperaturen sorgt dafür, dass später beim weiteren Abkühlen nicht von einer vergleichsweise hohen Temperatur von 32°C bis 35°C, wie im Stand der Technik üblich, heruntergekühlt werden muss, was für beträchtliche Energieeinsparung sorgt. Die abgesenkte Gärtemperatur von 15°C bis 20°C kombiniert mit der verlängerten Gärdauer hat auch qualitätsmäßige Vorteile, wie später noch genauer erläutert wird.

Weiter vorteilhaft wird beim Senken der Raumtemperatur mindestens eine Plateauphase mit konstanter Temperatur gehalten, während der der Tröpfchennebel regeneriert wird, wenn dies nötig ist. Beim erfindungsgemäßen Verfahren werden relativ geringe Abkühlgeschwindigkeiten gefahren, die im Bereich von 0.26°C/min und 1.3°C/min liegen. Ein schnelleres Abkühlen ist unerwünscht, da es den Tröpfennebel zerstört, und würde sich nachteilig auf den Kühlprozess und auf die Qualität des Teiglings auswirken.

Im Folgenden soll die Erfindung anhand der Zeichnungsfigur näher erläutert werden. In der grafischen Darstellung wird für verschiedene Brotteiglinge der Verlauf der Kerntemperatur in Reaktion auf die Raumtemperatur dargestellt.

In der Zeichnungsfigur stellt die Linie A den Verlauf der Kerntemperatur bei einem Roggenteigling dar, die Linie B den Verlauf der Kerntemperatur bei einem Vollkornbrotteigling, C den Verlauf der Kerntemperatur bei einem Kürbiskernbrotteigling im Kasten und D den Verlauf der Kerntemperatur bei einem weiteren Roggenbrotteigling im Kasten. Strichliert ist der Verlauf der Raumtemperatur angegeben.

Zum Herstellen eines Teiglinges werden die üblichen Zutaten und Backmittel, ein Quellstück und Trockensauerteig nach festgelegten Teigparametern zu einem Teig verarbeitet. Nach erfolgter Teigruhe wird der Teig über einen Hebekipper dem Abwieger zugeführt. Die Teiglinge werden abgewogen, in Form gebracht, ggf. in eine Dekormischung fallengelassen und auf Backbleche mit oder ohne Backtrennpapier aufgelegt. Die Teiglinge werden anschließend auf Stikkenwägen in einen klimatisierbaren Raum gefahren. Dort werden sie zunächst bei einer Temperatur von 15 °C über eine vorgegebene Zeitdauer gegart (in der Zeichnungsfigur nicht dargestellt). Dabei wird die Luftfeuchtigkeit in dem klimatisierbaren Raum auf 100 % r.F. eingestellt, indem mit Hilfe eines Ultraschallvemeblers zuvor gereinigtes Wasser in Tröpfchenform gebracht wird, wobei die Tröpfchen einen Durchmesser von 10 µm oder kleiner aufweisen. Mittels an sich bekannter Maßnahmen wird während des gesamten Verfahrens für eine ständige steuerbare Umwälzung der Luft in dem Raum mit unterschiedlichen Geschwindigkeiten gesorgt. Durch das Zusammenbringen mit den vernebelten Tröpfchen werden sowohl die Hefeaktivität als auch die Enzymatik angeregt, daher sind niedrigere Gärtemperaturen im Bereich von etwa 15°C bis 20°C möglich. Diese niedrigen Gärtemperaturen lassen die Mehlbestandteile des Teiglings besser verquellen, insbesondere wenn länger gegärt wird, und es entwickeln sich Aroma- und Geschmacksstoffe. Es hat sich gezeigt, dass durch diese Vorgehensweise die Standfestigkeit und die Stabilität des Teiglings gefördert werden, was dazu beiträgt, die Qualität beim Kühlen, Gefrieren und Auftauen zu erhalten.

Jetzt wird in einer ersten Kühlphase über einen Zeitraum von 15 min auf -4 °C abgekühlt. Diese Temperatur liegt über dem spezifischen Gefrierpunkt des Teiglings, der für jede Teiglingsorte mit -7 °C angenommen wird. Es erfolgt zunächst ein oberflächliches Kühlen des Backlings, dem die Kerntemperatur folgt. Daran schließt sich eine 15-minütige Plateauphase bei - 4°C an, während der die Feuchtigkeit nachreguliert und der Nebel regeneriert wird. Anschließend wird über weitere 15 Minuten auf etwa - 10°C abgekühlt, sodann werden die Kühlaggregate ausgeschaltet. Ziel ist es, die Aktivität der Hefe zu stoppen, was bei etwa + 6°C der Fall ist. Ansonsten besteht die Gefahr, dass die Hefe im Kern des Teiglings nachgärt, was zu Rissen in der Oberfläche führt.

Ein schnelles Abkühlen ist bei dem erfindungsgemäßen Verfahren nachteilig, da es den Nebel zerstört. Falls erforderlich, können neben der angesprochenen Plateauphase auch weitere Phasen mit konstanter Temperatur zur Regenerierung des Nebels eingefügt werden.

Während des Einregelns des Nebels beträgt die Toleranz bis zum erneuten Anschalten der Aggregate etwa 1.5 °C, was den Anstieg der Raumtemperatur bis zum Ablauf von etwa 1 h Kühlzeit erklärt.

Erst wenn die Kerntemperatur des Teiglings + 6°C erreicht hat, also je nach Teiglingssorte, nach 65 bis 95 Minuten nach Beginn der Kühlung, können die Kühlaggregate auf volle Leistung geschaltet werden. Nach weiterem Absenken wird die Raumtemperatur zwischen -20 und -25 °C gehalten, bis die Kerntemperatur -7 °C erreicht. Dies ist für den Roggenbrotteigling nach etwa 2 h 30 min der Fall, für den Vollkornbrotteigling und den Kürbiskembrotteigling im Kasten nach etwa 2 h 45 min und für den weiteren Roggenbrotteigling im Kasten nach 3 h 00 min. Da die Feuchtigkeit bei den Teiglingen im Kasten nur über eine geringere Oberfläche einwirken kann, wird die Kerntemperatur dort geringfügig später erreicht. Der Roggenbrotteigling hatte zudem eine relativ große Einwaage (1200 g), so dass hier eine längere Behandlungszeit beobachtet wird.

Die so vorbereiteten Teiglinge können dann tiefgefroren und dann geeignet verpackt, z. B. in Polyethylenbeuteln, zentral in einem Tiefkühlhaus eingelagert werden. Die tiefgefrorenen Brotteige werden dann über eine Logistik in die Bäckereien ausgeliefert und vor Ort zunächst im Tiefkühllagerfroster eingelagert. Je nach Bedarf können die Brotteiglinge dem Froster entnommen, nach festgelegten Parametern aufgetaut und nach dem entsprechenden Backprogramm gebacken werden. So sind in den Bäckereien ständig frische Brote bedarfsgerecht zur Verfügung.

Mit dem erfindungsgemäßen Verfahren wird eine räumliche Trennung des Ortes der Herstellung und des Backens der Teiglinge ermöglicht, wobei wahrnehmbare Qualitätsvorteile entstehen. Auch wird es jetzt möglich, ein reduziertes Basissortiment als Tiefkühlteiglinge auszuliefern und vor Ort in ein großes, veredeltes Backwarensortiment umzuwandeln. Backwaren werden nicht mehr zentral gebacken und müssen nicht mehr mit großem Kosten- und Zeitaufwand täglich frisch ausgeliefert werden.

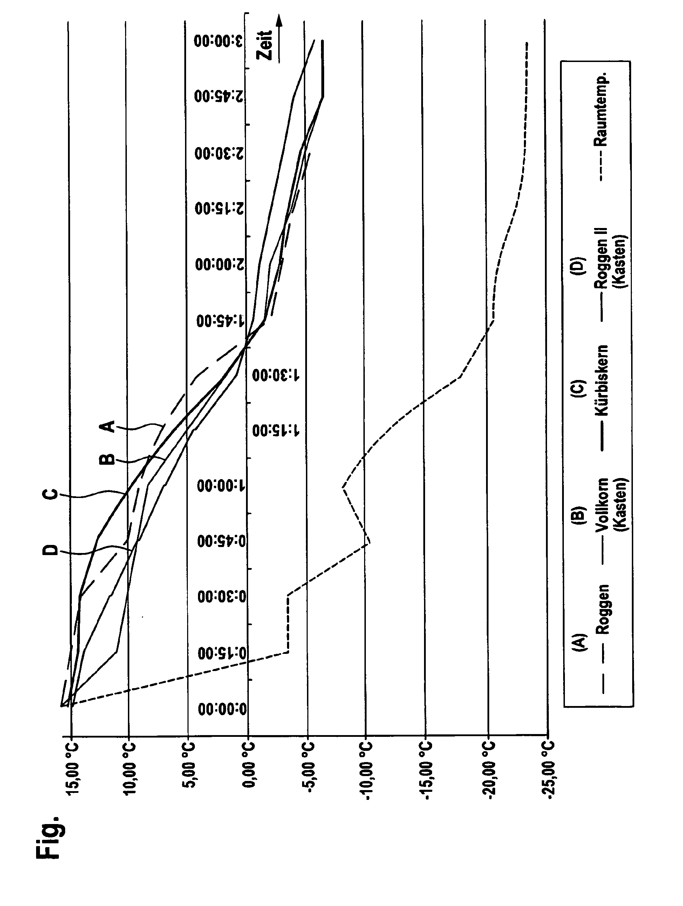

## Patentansprüche

1. Verfahren zum Herstellen von langzeitig lagerfähigen Teiglingen, bei dem
a) die Teiglinge in einen klimatisierbaren Raum gebracht werden,
b) eine Luftfeuchtigkeit von 100% r.F. eingestellt wird, wobei Wasser mit einer Tröpfchengröße < 10 µm vernebelt wird; und
c) die Temperatur des Raumes abgesenkt und die abgesenkte Temperatur gehalten wird, bis die Kerntemperatur des Teiglings unter dem spezifischen Gefrierpunkt des Teiglings liegt.

2. Verfahren nach Anspruch 1, bei dem die Teiglinge vor dem Schritt c) bei einer Temperatur von 15°C bis 20°C über eine vorbestimmte Zeitdauer gegart werden.

3. Verfahren nach Anspruch 1 oder 2, bei dem im Schritt c) mindestens eine Plateauphase mit konstanter Temperatur gehalten wird, während der der Tröpfchennebel regeneriert wird.

4. Verfahren nach einem der Ansprüche 1 bis 3, bei dem die Temperatur des Raumes mit einer Geschwindigkeit im Bereich von 0.26°C/min bis 1.30°C/min abgesenkt wird.

## Claims

1. A method for producing dough pieces which can be stored for a long period of time, wherein
a) the dough pieces are brought into a room which can be conditioned,
b) an air humidity of 100% RH is set, wherein water having a droplet size of < 10 µm is aerolized,
c) the temperature of the room is decreased and the decreased temperature is maintained until the core temperature of said dough piece is below the specific freezing temperature of said dough piece.

2. The method of claim 1, wherein prior to step c) said dough pieces are proved at a temperature from 15°C to 20°C for a predefined period of time.

3. The method of claim 1 or 2, wherein at step c) at least one plateau phase of constant temperature is maintained while the aerosol is regenerated.

4. The method of any of claims 1 to 3 wherein the temperature of the room is decreased at a rate from 0.26°C/min to 1.30°C/min.

## Revendications

1. Procédé pour fabriquer des pâtes pouvant être stockées pendant une longue durée, avec lequel
a) on met les pâtes dans un espace climatisable,
b) on règle l'une humidité relative de l'air à 100% en nébulisant de l'eau sous forme de gouttelette ayant une dimension < 10 µm; et
c) on abaisse la température de l'espace et on la maintient jusqu'à ce que la température au coeur d'une pâte soit inférieure au point de congélation spécifique de la pâte.

2. Procédé selon la revendication 1, selon lequel les pâtes sont cuites avant l'étape c) à une température de 15°C à 20°C pendant une durée prédéfinie.

3. Procédé selon la revendication 1 ou 2, selon lequel, à l'étape c), on maintient au moins une phase de plateau à une température constante, pendant laquelle le brouillard de gouttelettes est régénéré.

4. Procédé selon l'une quelconque des revendications 1 à 3, selon lequel on abaisse la température de l'espace avec une vitesse de l'ordre de 0,26°C/min à 1,30°C/min.
